(19) Europäisches Patentamt
European Patent Office
Office européen des brevets

(11) **EP 4 617 516 A1**

(12) **EUROPEAN PATENT APPLICATION**
published in accordance with Art. 153(4) EPC

(43) Date of publication:
**17.09.2025 Bulletin 2025/38**

(21) Application number: 23914399.3

(22) Date of filing: **09.11.2023**

(51) International Patent Classification (IPC):
*F16C 11/10* (2006.01)   *H05K 5/02* (2006.01)
*G09F 9/30* (2006.01)   *H04M 1/02* (2006.01)
*G06F 1/16* (2006.01)

(52) Cooperative Patent Classification (CPC):
F16C 11/10; G06F 1/16; G09F 9/30; H04M 1/02;
H05K 5/02

(86) International application number:
**PCT/CN2023/130749**

(87) International publication number:
**WO 2024/146262 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.01.2023 CN 202320048378 U**

(71) Applicant: **Honor Device Co., Ltd.**
**Shenzhen, Guangdong 518040 (CN)**

(72) Inventors:
• **YANG, Desen**
**Shenzhen, Guangdong 518040 (CN)**
• **ZANG, Yongqiang**
**Shenzhen, Guangdong 518040 (CN)**
• **HUO, Guoliang**
**Shenzhen, Guangdong 518040 (CN)**
• **WU, Ling**
**Shenzhen, Guangdong 518040 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **ELASTIC ELEMENT, ROTATING MECHANISM AND ELECTRONIC DEVICE**

(57)    This application discloses an elastic element, a rotating mechanism, and an electronic device, and belongs to the field of foldable electronic device technologies. The elastic element includes connecting arms and deformation portions. The plurality of connecting arms are distributed at intervals in a first direction, and there is an angle between a length extension direction of the connecting arm and the first direction. The plurality of connecting arms are successively connected to each other by using the deformation portions, and two ends of a middle connecting arm in three adjacent connecting arms are respectively connected to the other two connecting arms by using the deformation portions. An angle formed between length directions of the two connecting arms connected to the deformation portions after the deformation portions deform when subjected to a force is changeable. The rotating mechanism includes a first rotating member, a second rotating member, and an elastic element. The first rotating member and the second rotating member are capable of rotating relative to each other. The electronic device includes a first frame body, a second frame body, and a rotating mechanism, and the rotating mechanism is installed between the first frame body and the second frame body. In this application, impact of the elastic element on thickness space occupation can be reduced.

FIG. 4

## Description

This application claims priority to Chinese Patent Application No. 2023200483783, filed with the China National Intellectual Property Administration on January 05, 2023 and entitled "ELASTIC ELEMENT, ROTATING MECHANISM, AND ELECTRONIC DEVICE", which is incorporated herein by reference in its entirety.

## TECHNICAL FIELD

This application relates to the field of foldable electronic device technologies, and in particular, to an elastic element, a rotating mechanism, and an electronic device.

## BACKGROUND

Screen sizes of electronic devices such as a mobile phone, a tablet computer, and an electronic reader become increasingly large, but it is inconvenient to carry an excessively large electronic device. Therefore, a foldable electronic device emerges to have easy portability while achieving a large screen size. The foldable electronic device generally uses a rotating mechanism to implement folding, and the rotating mechanism can enable two structural members to rotate relative to each other, to implement folding or unfolding of the electronic device. In addition, the rotating mechanism further has a damping function, so that the two structural members can present a specific folding angle in a rotation process. A damping assembly of the rotating mechanism generally uses a coil spring for a damping elastic force, and the coil spring needs to have a specific wire diameter to ensure that an elastic force requirement is met. In addition, a fastening shaft further needs to be used to pass through the inside of the coil spring, to fasten the coil spring. Because the coil spring needs to have a specific wire diameter and be fastened by using the fastening shaft, it is necessary to provide sufficient thickness space to accommodate use of the coil spring.

## SUMMARY

This application provides an elastic element, a rotating mechanism, and an electronic device, and resolves a technical problem that because a coil spring needs to have a specific wire diameter and be fastened by using a fastening shaft, it is necessary to provide sufficient thickness space to accommodate use of the coil spring.

The technical solutions are as follows:
A first aspect of this application provides an elastic element. The elastic element includes connecting arms and deformation portions. There are a plurality of connecting arms, the plurality of connecting arms are distributed at intervals in a first direction, and there is an angle between a length extension direction of the connecting arm and the first direction. The plurality of connecting arms are successively connected to each other by using the deformation portions, and two ends of a middle connecting arm in three adjacent connecting arms are respectively connected to the other two connecting arms by using the deformation portions. An angle formed between length directions of the two connecting arms connected to the deformation portions after the deformation portions deform when subjected to a force is changeable.

In the foregoing solution, after the plurality of connecting arms are distributed at intervals in the first direction, the plurality of connecting arms are successively connected to each other by using the deformation portions, so that the elastic element is of a planar structure as a whole, and three adjacent connecting arms and deformation portions at end portions of the connecting arms always tend to form a basically S shape. Because a maximum diameter of a coil spring usually needs to be increased while a wire diameter requirement of the coil spring is met, the coil spring needs to occupy relatively large thickness space. Compared with the coil spring, the elastic element in this application mainly considers, in terms of an elastic capability of the elastic element, related parameters that achieve relatively small thickness space occupation: an elastic modulus of the deformation portions and a length of the connecting arm, so that the elastic element occupies relatively small thickness space when compressed in the first direction.

In some implementations, length directions of at least two connecting arms are parallel to each other.

In the foregoing solution, reduction of an overall length of the elastic element in the first direction is facilitated, so that the elastic element is applicable to different installation environments.

In some implementations, the length of the connecting arm is greater than a spacing between two adjacent connecting arms.

In the foregoing solution, the length of the connecting arm is increased, so that compression of the elastic element is facilitated.

In some implementations, the deformation portions is of a curved structure.

In the foregoing solution, deformation of the deformation portions after being subjected to a force can be facilitated, so that compression of the elastic element is facilitated.

In some implementations, the curved structure is in a shape of a semicircle, a minor arc, a polyline, or a wavy line.

In the foregoing solution, after the deformation portions is subjected to a force, deformation of the deformation portions is facilitated, to conveniently compress the elastic element. In addition, setting the deformation portions to be in the shape of the polyline or the wavy line can increase an elastic force of the elastic element, so that the elastic element is applicable to some application scenarios in which a relatively large elastic force is required.

In some implementations, a material of the elastic element is an elastoplastic material.

In the foregoing solution, deformation of the elastic element is facilitated.

In some implementations, the elastoplastic material is steel, copper, or aluminum.

In the foregoing solution, the elastic element is durable and can have better elastic deformation performance.

In some implementations, the connecting arm is of a plate-like structure, and a cross section of the connecting arm in a width direction is a rectangle.

In the foregoing solution, it is convenient to install the elastic element and make the elastic element reach a required elastic force.

In some implementations, a spacing between two adjacent connecting arms is not greater than a maximum deflection of the connecting arm.

In the foregoing solution, the elastic element can be better designed, to ensure effectiveness of the elastic element during use.

In some implementations, a height of the elastic element in the first direction meets the following condition: $H \leq h$, where $h = Nt + (N-1)\dfrac{4Fl^3}{Ewt^3}$, $H$ represents the height of the elastic element in the first direction, $N$ represents a quantity of connecting arms, $t$ represents a thickness of the connecting arm, F represents uniform load, $l$ represents a length of the connecting arm, E represents an elastic modulus of a material of the connecting arm, and $w$ represents a width of the connecting arm.

In the foregoing solution, the height of the elastic element is calculated based on a deflection of the connecting arm, so that the elastic element can be better designed, to ensure effectiveness of the elastic element during use.

A second aspect of this application provides a rotating mechanism, including a first rotating member, a second rotating member, and any one of the described elastic elements. The first rotating member and the second rotating member are capable of rotating relative to each other, and the elastic element is configured to damp the relative rotation between the first rotation and the second rotating member.

In the foregoing solution, after the rotating mechanism uses the foregoing elastic element, impact of the elastic element on thickness space occupation can be reduced.

In some implementations, a rotation axis of the first rotating member during rotation of the first rotating member relative to the second rotating member is parallel to a direction in which the elastic element is compressed.

In the foregoing solution, it is convenient to compress the elastic element and reduce occupied space of the rotating mechanism.

In some implementations, the rotating mechanism further includes a damping assembly. The damping assembly includes damping shaft fitting portions, and the damping shaft fitting portion includes a first damping shaft and a second damping shaft fitting with the first damping shaft; and the first damping shaft is configured to: in a rotation process of the first damping shaft, enable the second damping shaft to move in a second direction, so that the second damping shaft applies a force to the elastic element to enable the elastic element to be compressed. The second direction is an axial direction of the second damping shaft.

In the foregoing solution, the first damping shaft and the second damping shaft are used to conveniently compress the elastic element.

In some implementations, an end surface of the first damping shaft has a plurality of groove structures recessed in an axial direction of the first damping shaft, and the plurality of groove structures are distributed on a first specified circle;

an end surface of the second damping shaft has a plurality of convex structures protruding in the axial direction of the second damping shaft, and the plurality of convex structures are distributed on a second specified circle; and
the plurality of groove structures are disposed in one-to-one correspondence with the plurality of convex structures, and the convex structure is capable of being inserted into the groove structure.

In the foregoing solution, the groove structure and the convex structure fit with each other, so that different included angles can be formed between the first rotating member and the second rotating member when the first rotating member and the second rotating member rotate relative to each other.

In some implementations, the damping assembly further includes a limiting plate, first limiting space is formed between the limiting plate and the second damping shaft, and the elastic element is installed in the first limiting space.

In the foregoing solution, the elastic element is conveniently positioned and installed.

In some implementations, the rotating mechanism further includes a first base. A first installation shaft is installed on the first base, and the first damping shaft and the second damping shaft are sleeved on the first installation shaft.

The limiting plate is connected to the first installation shaft.

In the foregoing solution, the first damping shaft, the second damping shaft, and the limiting plate are conveniently installed.

In some implementations, the damping shaft fitting portion further includes a transition plate, and the first damping shaft is fixedly connected to the transition plate; and
the first rotating member and the second rotating member are respectively provided with the damping shaft fitting portions, and the first rotating member and the second rotating member are respectively plug-connected to transition plates in the damping shaft fitting portions corresponding to the first rotating member and the second rotating member.

In the foregoing solution, it is convenient to implement linkage between each of the first rotating member and the second rotating member and a first damping shaft corresponding to each of the first rotating member and the second rotating member.

In some implementations, the rotating mechanism further includes a gear set. The gear set is configured to implement linkage between the first damping shafts corresponding to the first rotating member and the second rotating member.

In the foregoing solution, when linkage between the two first damping shafts is implemented by using the gear set, linkage between the first rotating member and the second rotating member is also facilitated.

In some implementations, a rotation axis of the first rotating member during rotation of the first rotating member relative to the second rotating member is perpendicular to a direction in which the elastic element is compressed.

In the foregoing solution, an application scope of the elastic element is expanded.

In some implementations, the rotating mechanism further includes follower portions. The follower portion includes a first convex portion, a sliding member, and a limiting bracket.

The limiting bracket and the sliding member fit with each other to form second limiting space, and the elastic element is installed in the second limiting space; and

the first convex portion is configured to: in a process in which the limiting bracket rotates with the sliding member, enable the limiting bracket to move in a third direction, so that the elastic element is enabled, by using the limiting bracket, to be compressed.

In the foregoing solution, the elastic element is conveniently installed and compressed.

In some implementations, the limiting bracket includes a first baffle plate, first end plates, and a squeezing shaft;

the first end plates are respectively fastened to two opposite ends of the first baffle plate, the squeezing shaft is connected to the first baffle plate, and a length direction of the first end plate is parallel to the third direction; and
the squeezing shaft is capable of abutting against the first convex portion, so that the first convex portion is capable of pushing the squeezing shaft to move in the third direction.

In the foregoing solution, when the elastic element is limited, the first convex portion is used to push the squeezing shaft, so that the elastic element can be compressed.

In some implementations, the first rotating member and the second rotating member are respectively provided with the follower portions, and the first rotating member and the second rotating member are respectively slidably connected to sliding members of the follower portions corresponding to the first rotating member and the second rotating member.

In the foregoing solution, when the first rotating member and the second rotating member rotate relative to each other, the sliding member can be driven to rotate.

In some implementations, the rotating mechanism further includes a second base. The first convex portion is fastened to the second base, and the sliding member is rotatably connected to the second base.

In the foregoing solution, the first convex portion conveniently pushes the squeezing shaft to move.

A third aspect of this application provides an electronic device, including a first frame body, a second frame body, and any one of the described rotating mechanisms. The rotating mechanism is installed between the first frame body and the second frame body.

In the foregoing solution, after the electronic device uses the foregoing rotating mechanism, impact of an elastic element on thickness space occupation can be reduced.

## BRIEF DESCRIPTION OF DRAWINGS

FIG. 1 is a schematic diagram of a structure of an elastic element according to an embodiment of this application;
FIG. 2 is a schematic diagram of a structure of an elastic element from another angle according to an embodiment of this application;
FIG. 3 is a schematic diagram of a structure of an elastic element from still another angle according to an embodiment of this application;
FIG. 4 is a schematic diagram of a structure of a rotating mechanism according to an embodiment of this application;
FIG. 5 is a schematic diagram of a structure of a rotating mechanism from another angle according to an embodiment of this application;
FIG. 6 is a schematic diagram of a structure of a rotating mechanism from still another angle according to an embodiment of this application;
FIG. 7 is an exploded view of a rotating mechanism according to an embodiment of this application;
FIG. 8 is an exploded view of a rotating mechanism from another angle according to an embodiment of this application;
FIG. 9 is a schematic diagram of a partial structure of a rotating mechanism according to an embodiment of this application;

FIG. 10 is a schematic diagram in which a first damping shaft is connected to a transition plate according to an embodiment of this application;

FIG. 11 is a schematic diagram in which two second damping shafts are connected to each other by using a first connecting plate according to an embodiment of this application;

FIG. 12 is a schematic diagram of a structure of another rotating mechanism according to an embodiment of this application;

FIG. 13 is a schematic diagram of a structure of another rotating mechanism from another angle according to an embodiment of this application;

FIG. 14 is an exploded view of another rotating mechanism according to an embodiment of this application;

FIG. 15 is a schematic diagram of a partial structure of another rotating mechanism according to an embodiment of this application;

FIG. 16 is a schematic diagram of a partial structure of another rotating mechanism according to an embodiment of this application;

FIG. 17 is a schematic diagram in which a sliding member, a limiting bracket, and an elastic element fit with each other according to an embodiment of this application;

FIG. 18 is a schematic diagram of a structure of a sliding member according to an embodiment of this application;

FIG. 19 is a schematic diagram of a structure of another rotating mechanism according to an embodiment of this application (no pressing plate is shown);

FIG. 20 is a schematic diagram of a structure of a second base according to an embodiment of this application;

FIG. 21 is a schematic diagram of a structure of an electronic device according to an embodiment of this application;

FIG. 22 is another schematic diagram of a structure of an electronic device according to an embodiment of this application; and

FIG. 23 is a line graph of force displacement of an elastic element according to an embodiment of this application.

Descriptions of main reference numerals:
100. elastic element; 101. connecting arm; 102. deformation portion; 103. head portion; 104. tail portion; 200. rotating mechanism; 201. first rotating member; 202. second rotating member; 203. first damping shaft; 204. second damping shaft; 205. groove structure; 206. convex structure; 207. limiting plate; 208. first limiting space; 209. first base; 210. first installation shaft; 211. circular arc-shaped groove; 212. circular arc-shaped block; 213. transition plate; 214. strip-shaped hole; 215. limiting pin; 216. first connecting plate; 217. drive gear; 218. driven gear; 219. second connecting plate; 220. first convex portion; 221. sliding member; 222. limiting bracket; 223. second limiting space; 224. first baffle plate; 225. first end plate; 226. squeezing shaft; 227. guide rib; 228. sliding groove; 229. guide groove; 230. second base; 231. pressing plate; 232. arc-shaped rotating block; 233. arc-shaped rotating groove; 301. first frame body; 302. second frame body.

## DESCRIPTION OF EMBODIMENTS

To make the objectives, technical solutions, and advantages of this application clearer, the following further describes implementations of this application in detail with reference to the accompanying drawings.

It should be understood that "a plurality of" mentioned in this application means two or more. In the descriptions of this application, unless otherwise stated, "/" means "or". For example, A/B may indicate A or B. The term "and/or" in this specification is merely an association relationship for describing associated objects, and indicates that three relationships may exist. For example, A and/or B may indicate the following three cases: Only A exists, both A and B exist, and only B exists. In addition, to clearly describe the technical solutions of this application, words such as "first" and "second" are used to distinguish between same items or similar items with basically the same functions and effects. A person skilled in the art may understand that the words such as "first" and "second" do not limit a quantity and an execution sequence, and the words such as "first" and "second" do not indicate a definite difference.

Most elastic elements of damping structures in electronic devices are coil springs. However, because the coil spring is made of a linear spring wire, the spring wire needs to have a specific wire diameter to ensure that an elastic force requirement is met. In addition, a fastening shaft further needs to be used to pass through the inside of the coil spring, to fasten the coil spring. Because the coil spring needs to have a specific wire diameter and be fastened by using the fastening shaft, it is necessary to provide sufficient thickness space to accommodate use of the coil spring.

Therefore, embodiments of this application provide an elastic element 100, a rotating mechanism 200, and an electronic device, to resolve the foregoing problems. The following describes in detail the elastic element 100, the rotating mechanism 200, and the electronic device that are provided in the embodiments of this application.

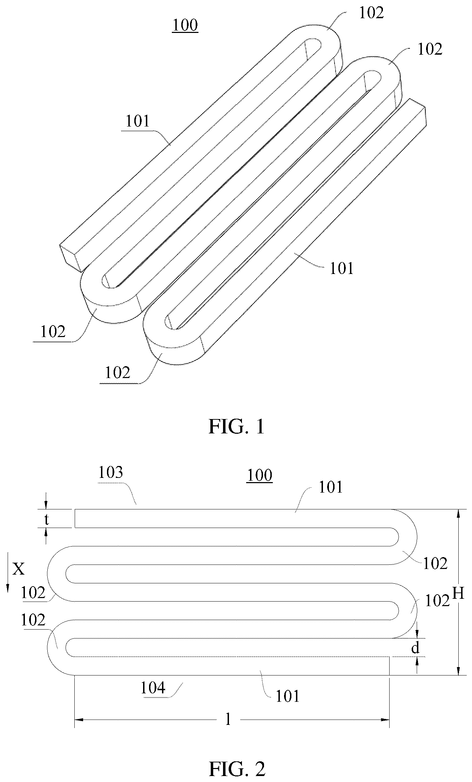

With reference to FIG. 1 to FIG. 3, in one or more embodiments, the elastic element 100 provided in this application can be applied to a mobile phone, a notebook computer, a tablet computer, and the like. Certainly, the elastic element 100 is not limited thereto, and may also be used in another product. The elastic element 100 includes connecting arms 101 and deformation portions 102. There are a plurality of connecting arms 101, the plurality of connecting arms 101 are distributed at intervals in a first direction X, and there is an angle between a length extension direction of the connecting arm 101 and the first direction X. The plurality of connecting arms 101 are successively connected to each other by using the deformation portions 102, and two ends of a middle connecting arm 101 in three adjacent connecting arms 101 are respectively connected to the other two connecting arms 101 by using the deformation portions 102. An angle formed between length directions of the two connecting arms 101 connected to the deformation portions 102 after the deformation portions 102 deforms when subjected to a force is changeable, so that the elastic element 100 can be compressed or restored to an initial state, and a compression direction of the elastic element 100 is parallel to the first direction X.

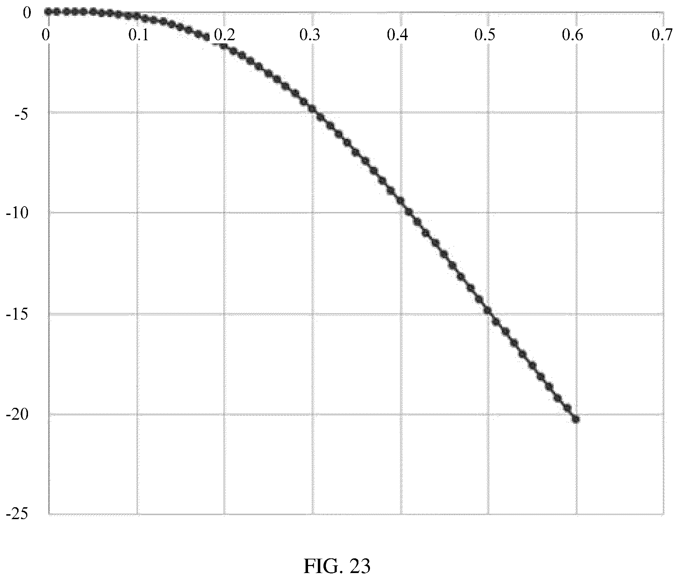

The elastic element 100 provided in at least one embodiment of this application is of a planar structure as a whole, and three adjacent connecting arms 101 and deformation portions 102 at end portions of the connecting arms 101 always tend to form a basically S shape. In this way, a flexible beam can be formed by using the connecting arms 101, so that the elastic element 100 can have a relatively large deformation capability, and it is convenient for the deformation portions 102, thereby equipping the elastic element 100 with specific yield resistance and improving an elastic capability of the elastic element 100. In addition, because a maximum diameter of a coil spring usually needs to be increased while a wire diameter requirement of the coil spring is met, the coil spring needs to occupy relatively large thickness space. Compared with the coil spring, the elastic element 100 in this application mainly considers, in terms of an elastic capability of the elastic element 100, related parameters that achieve relatively small thickness space occupation: an elastic modulus of the deformation portions 102 and a length of the connecting arm 101, so that the elastic element 100 occupies relatively small thickness space when compressed in the first direction X. In addition, under a condition of same space occupation, the elastic element 100 in this embodiment of this application can provide a larger elastic force. Referring to FIG. 23, a horizontal coordinate in the figure represents a movement displacement of a head portion when the elastic element is compressed, and a vertical coordinate represents an elastic force after the elastic element is compressed. That the force is negative indicates that a direction of the elastic force is opposite to the first direction X. It can be learned from FIG. 23 that after the elastic element 100 in this embodiment of this application is compressed to some extent, a value of the elastic force of the elastic element 100 rapidly increases, and therefore, elastic potential energy of the elastic element 100 is relatively large, in other words, the elastic element can provide a larger elastic force. It should be noted that the elastic element 100 in this embodiment of this application is not limited to an electronic device, and may be used in another scenario, for example, a sliding door scenario or a scenario with a rotating shaft.

Referring to FIG. 1 and FIG. 2, in some embodiments, a quantity of connecting arms 101 is one more than a quantity of deformation portions 102. In this case, any two adjacent connecting arms 101 are connected to each other by using one deformation portion 102, and the connecting arm 101 is in a form of a cantilever. In this way, the elastic element 100 is conveniently compressed. An example quantity of connecting arms is 2~30, or the like. For example, the quantity of connecting arms is 3, 4, 5, 10, or 15. Certainly, the quantity of connecting arms is not limited to 30 or fewer, and may be specifically selected based on a requirement. Generally, in a plurality of connecting arms 101, an end of a connecting arm 101 in each of a head portion 103 and a tail portion 104 in a length direction of the connecting arm is connected to the deformation portions 102, and the other end thereof is a free end, and is not connected to the deformation portions 102. Two ends of connecting arms 101, in the plurality of connecting arms 101, other than the connecting arms 101 in the head portion 103 and the tail portion 104 in length directions of the connecting arms 101 are respectively connected to deformation portions 102. For the head portion 103 and the tail portion 104 of the elastic element 100, in terms of a plurality of connecting arms 101 arranged in the first direction X, the tail portion 104 of the elastic element 100 is determined in the first direction X once the head portion 103 of the elastic element 100 is determined. The angle formed between the length extension direction of the connecting arm 101 and the first direction X may be a right angle, or may be an acute angle. Generally, because the coil spring needs to be fastened by using a fastening shaft, a compression amount of the coil spring is limited by a length of the fastening shaft. In contrast, in the elastic element 100 in this embodiment of this application, support is mainly provided by the connecting arm 101. Therefore, fastening by the fastening shaft is omitted, a compression amount of the elastic element 100 is not limited by the length of the fastening shaft, and a maximum compression amount can be reached. It should be noted that in some other possible implementations, a positioning groove or a positioning hole may be disposed on a surface enclosed by a length and a width of the connecting arm 101 in each of the head portion 103 and the tail portion 104. In this way, the elastic element 100 is conveniently installed. In addition, after the elastic element is subjected to a force, the connecting arm 101 may also bend and deform, and an angle formed between two adjacent connecting arms is also changeable.

Referring to FIG. 2, in some embodiments, length directions of at least two connecting arms 101 are parallel to each other. In this way, reduction of an overall length of the elastic element 100 in the first direction X is facilitated, so that the elastic element 100 is applicable to different installation environments. For example, length directions of the plurality of connecting arms 101 are parallel to each other. A spacing between every two adjacent connecting arms 101 may be equal.

Alternatively, a spacing between at least one pair of two adjacent connecting arms 101 may be set, based on a situation, to be less than or greater than a spacing between another pair of two adjacent connecting arms 101. Certainly, spacings between adjacent connecting arms 101 may gradually increase in the first direction X. For example, the spacings between adjacent connecting arms 101 may be distributed in an arithmetic progression or a geometric progression, or certainly, may be exponentially distributed. A change in the spacings adapts to different compression amount changes, so that the elastic element 100 is applicable to different installation scenarios. It should be noted that to conveniently measure a spacing between two adjacent connecting arms 101, the spacing may be measured at a same reference point of the two adjacent connecting arms 101, for example, the spacing between the two adjacent connecting arms 101 is measured at a middle portion of the connecting arm 101, or the spacing between the two adjacent connecting arms 101 may be measured at an end portion of the connecting arm 101.

Referring to FIG. 2, in some embodiments, a length $l$ of the connecting arm 101 is greater than a spacing $d$ between two adjacent connecting arms 101. In this way, the length of the connecting arm 101 is increased to facilitate compression of the elastic element 100. For example, a length of each connecting arm 101 is greater than a spacing between any two adjacent connecting arms 101. It should be noted that in some other embodiments, lengths of the plurality of connecting arms 101 may be equal, or a length of at least one connecting arm 101 may be unequal to a length of each of remaining connecting arms 101. In addition, the lengths of the plurality of connecting arms 101 may gradually increase in the first direction X, for example, follow an arithmetic progression or a geometric progression or a variation thereof. In addition, in some other possible implementations, a length of at least one connecting arm 101 may be less than or equal to a spacing between the connecting arm 101 and another connecting arm 101 adjacent to the connecting arm 101, or a length of at least one connecting arm 101 may be less than or equal to a spacing between any two adjacent connecting arms 101.

In some embodiments, the deformation portions 102 is of a curved structure. In this way, the deformation portions 102 is set to be in a curved shape, so that deformation of the deformation portions 102 after being subjected to a force can be facilitated, thereby facilitating compression of the elastic element 100. For example, the curved structure is in a shape of a semicircle, a minor arc, a polyline, or a wavy line. In this way, deformation of the deformation portions 102 is facilitated after the deformation portions 102 is subjected to a force, so that compression of the elastic element 100 is facilitated. Setting the deformation portions 102 to be in the shape of the polyline or the wavy line can increase the elastic force of the elastic element 100, so that the elastic element 100 is applicable to some application scenarios in which a relatively large elastic force is required. Referring to FIG. 2, when the curved structure is in the shape of the semicircle, length directions of two adjacent connecting arms 101 are parallel to each other. When the curved structure is in the shape of the minor arc, length directions of two adjacent connecting arms 101 are not parallel to each other, and an intersection point of extension lines between the two adjacent connecting arms 101 is near a deformation portions 102 connected to the two adjacent connecting arms 101. However, when the curved structure is in the shape of the polyline or the wavy line, an adjacent curved structure includes a plurality of connection sub-segments successively connected head-to-tail.

In some embodiments, a material of the elastic element 100 is an elastoplastic material. For example, the elastoplastic material is steel, copper, or aluminum. Certainly, the elastoplastic material is not limited to the foregoing metal, and may be another metal. In this way, the elastic element 100 is durable and can have better elastic deformation performance. It should be noted that in some other possible implementations, the material of the elastic element 100 may alternatively be a combination of plastic and steel, to be specific, a material of the connecting arm 101 is plastic, and a material of the deformation portions 102 is steel, or a material of the connecting arm 101 is steel, and a material of the deformation portions 102 is plastic. Certainly, the elastic element 100 may alternatively use another type of elastic material or a superelastic material.

Referring to FIG. 2, in some embodiments, the connecting arm 101 is of a plate-like structure, a cross section of the connecting arm in a width direction is a rectangle, and a shape enclosed by a width and a thickness of the connecting arm 101 is a rectangle. Certainly, the cross section of the connecting arm 101 in the width direction is not limited to a rectangle, and may alternatively be another type of quadrilateral or a polygon, for example, a parallelogram, a pentagon, or a triangle, or may be a circle, an oval, a waist-like shape, or the like. For example, the width $w$ of the connecting arm 101 is greater than or equal to the thickness $t$ of the connecting arm 101. In this way, it is convenient to install the elastic element 100, make the elastic element 100 reach a required elastic force, and make the elastic element 100 achieve a relatively large elastic force in limited space. For example, the connecting arm 101 is of a planar plate-like structure, to be specific, a surface enclosed by a length and a width of the connecting arm 101 is a plane, in other words, a cross section of the connecting arm 101 in a length direction is a rectangle. A projection profile of the elastic element 100 on a first specified plane is a rectangle, the first specified plane is perpendicular to the first direction X, a projection profile of the elastic element 100 on a second specified plane is a rectangle, the second specified plane is parallel to the first direction X, and the second specified plane is perpendicular to the length direction of the connecting arm 101. Certainly, in some other possible implementations, the cross section of the connecting arm 101 in the length direction may alternatively be in a wavy shape, so that strength of the connecting arm 101 can be improved. The width of the connecting arm 101 may alternatively be less than the thickness of the connecting arm 101.

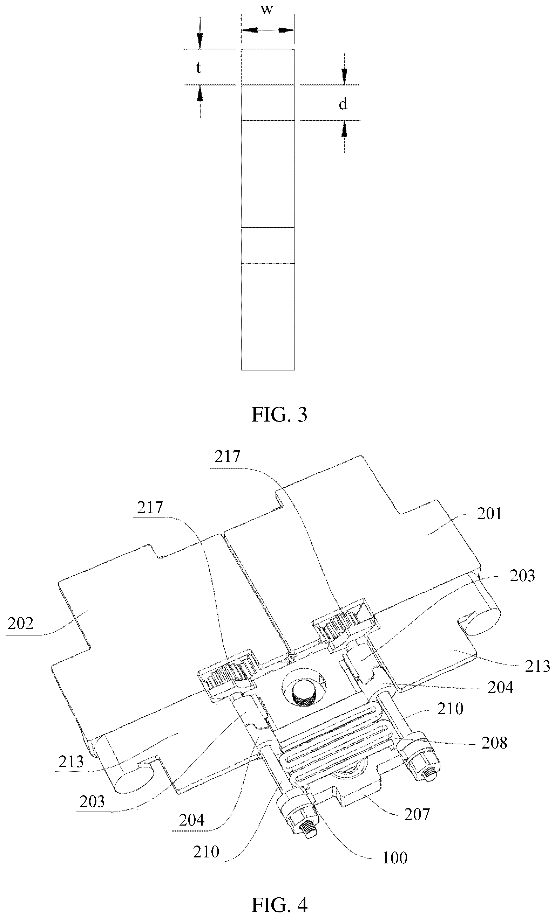

With reference to FIG. 2 and FIG. 3, in some implementations, to ensure that the elastic element 100 does not fail and is still elastic in a case of a maximum compression amount, a value of the spacing $d$ before two adjacent connecting arms 101 of the elastic element 100 needs to be limited, to be specific, a maximum value of the spacing is limited. A height of the elastic element 100 in a natural state is determined once the maximum value of the spacing is limited. For example, during determining of the height of the elastic element 100, an example in which the cross section of the connecting arm 101 is a rectangle is used for detailed description. Because the connecting arm 101 is in the form of a cantilever, a maximum deflection of the connecting arm 101 may be limited to the maximum value of the spacing between two adjacent connecting arms 101. In this way, the spacing between two adjacent connecting arms 101 is not greater than the maximum deflection of the connecting arm 101. It can be learned, based on a maximum deflection $Y_{\max} = \dfrac{Fl^3}{3EI}$ of a single connecting arm 101 and a moment of inertia of section $I = \dfrac{wt^3}{12}$ of the single connecting arm 101, that the maximum deflection of the single connecting arm 101 is

$Y_{\max} = \dfrac{Fl^3}{3EI} = \dfrac{Fl^3}{3E\dfrac{wt^3}{12}} = \dfrac{4Fl^3}{Ewt^3}$ . $F$ represents uniform load, $l$ represents a length of the single connecting arm 101, and E represents an elastic modulus of the material of the connecting arm 101. The material of the connecting arm 101 is determined once the material of the elastic element 100 is selected. $w$ represents the width of the connecting arm 101, $t$ represents the thickness of the connecting arm 101, and a magnitude of the uniform load $F$ is determined based on an actual overall torque requirement of the electronic device. Finally, it can be learned, based on the maximum deflection of the single connecting arm 101 and the thickness of the single connecting arm 101, that the height $H$ of the elastic element 100 in the first direction meets the following

condition: $H \le h$, where $h = Nt + (N-1)\dfrac{4Fl^3}{Ewt^3}$ , $N$

represents the quantity of connecting arms 101, $N$ is a positive integer, $t$ represents the thickness of the connecting arm 101, $F$ represents the uniform load, $l$ represents the length of the connecting arm 101, $E$ represents the elastic modulus of the material of the connecting arm 101, and $w$ represents the width of the connecting arm 101.

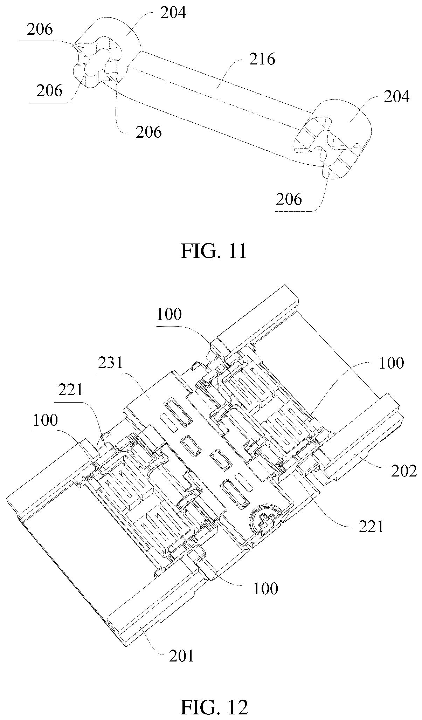

Referring to FIG. 4 and FIG. 12, FIG. 4 and FIG. 12 respectively show different types of rotating mechanisms 200 according to an embodiment of this application. In one or more embodiments, the rotating mechanism 200 provided in this embodiment of this application further includes a first rotating member 201, a second rotating member 202, and the elastic element 100 in any embodiment. The first rotating member 201 and the second rotating member 202 are capable of rotating relative to each other, and the elastic element 100 is configured to damp the relative rotation between the first rotation and the second rotating member 202. In this way, after the rotating mechanism 200 uses the foregoing elastic element 100, impact of the elastic element 100 on thickness space occupation can be reduced. The first rotating member 201 is configured to be fixedly connected to a first frame body 301 of a foldable electronic device, and the second rotating member 202 is configured to be fixedly connected to a second frame body 302 of the foldable electronic device. In this way, when the first frame body 301 rotates relative to the second frame body 302, the first rotating member 201 rotates relative to the second rotating member 202.

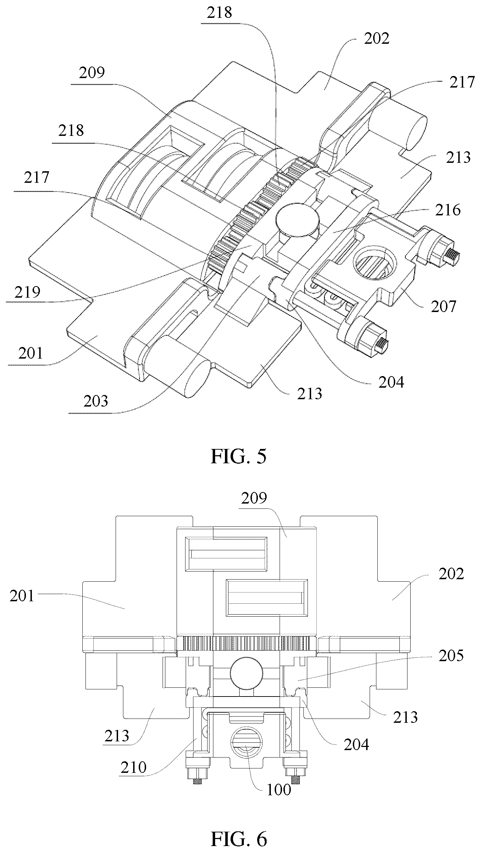

With reference to FIG. 4 to FIG. 11, in some embodiments, a rotation axis of the first rotating member 201 during rotation of the first rotating member 201 relative to the second rotating member 202 is parallel to a direction in which the elastic element 100 is compressed. In this way, compression of the elastic element 100 is facilitated, and occupied space of the rotating mechanism 200 is conveniently reduced.

With reference to FIG. 4 to FIG. 8, in some implementations, the rotating mechanism 200 further includes a damping assembly, so that the relative rotation between the first rotating member 201 and the second rotating member 202 is damped by using the damping assembly. The damping assembly includes damping shaft fitting portions, and the damping shaft fitting portion includes a first damping shaft 203 and a second damping shaft 204 fitting with the first damping shaft 203. The first damping shaft 203 is configured to: in a rotation process of the first damping shaft 203, enable the second damping shaft 204 to move in a second direction, so that the second damping shaft 204 applies a force to the elastic element 100 to enable the elastic element 100 to be compressed. The second direction is an axial direction of the second damping shaft 204. In this way, the elastic element 100 is compressed by using the first damping shaft 203 and the second damping shaft 204. In an embodiment, an end surface of the first damping shaft 203 fits with an end surface of the second damping shaft 204 by using axial cam structures. In this way, driven by the first rotating member 201 or the second rotating member 202, the first damping shaft 203 rotates. After the first damping shaft 203 rotates around an axis of the first damping shaft 203, the elastic element 100 is compressed, and the direction in which the elastic element 100 is compressed is further parallel to the second direction.

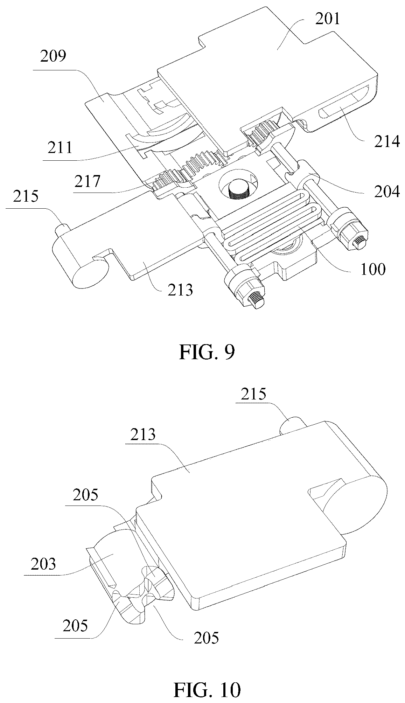

With reference to FIG. 10 and FIG. 11, in some embodiments, an end surface of the first damping shaft 203 has a plurality of groove structures 205 recessed along the axis of the first damping shaft 203, the plurality of groove structures 205 are distributed on a first specified circle, and a center of the first specified circle is on the rotation axis of the first damping shaft 203. An end surface of the second damping shaft 204 has a plurality of convex structures 206 protruding along an axis of the second damping shaft 204, the plurality of convex structures 206 are distributed on a second specified circle, and a center of the second specified circle is on an axis of the second damping shaft 204. The plurality of groove structures 205 are disposed in one-to-one correspondence with the plurality of convex structures 206, and the convex structure 206 is capable of being inserted into the groove structure 205. In this way, the plurality of groove structures 205 form an axial cam structure, and the plurality of convex structures 206 also form an axial cam structure, so that the axial cam structure on the end surface of the first damping shaft 203 fits with the axial cam structure on the end surface of the second damping shaft 204. In this way, different included angles can be formed between the first rotating member 201 and the second rotating member 202 when the first rotating member 201 and the second rotating member 202 rotate relative to each other.

Referring to FIG. 4, in some embodiments, the damping assembly further includes a limiting plate 207, first limiting space 208 is formed between the limiting plate 207 and the second damping shaft 204, and the elastic element 100 is installed in the first limiting space 208, to conveniently position and install the elastic element 100, so that the elastic element 100 can be compressed when the second damping shaft 204 moves in the second direction. Because the elastic element 100 is compressed, rotation of the first damping shaft 203 relative to the second damping shaft 204 can be damped. It should be noted that in the first limiting space 208, one elastic element 100 may be disposed, or a plurality of elastic elements 100 may be disposed based on a requirement.

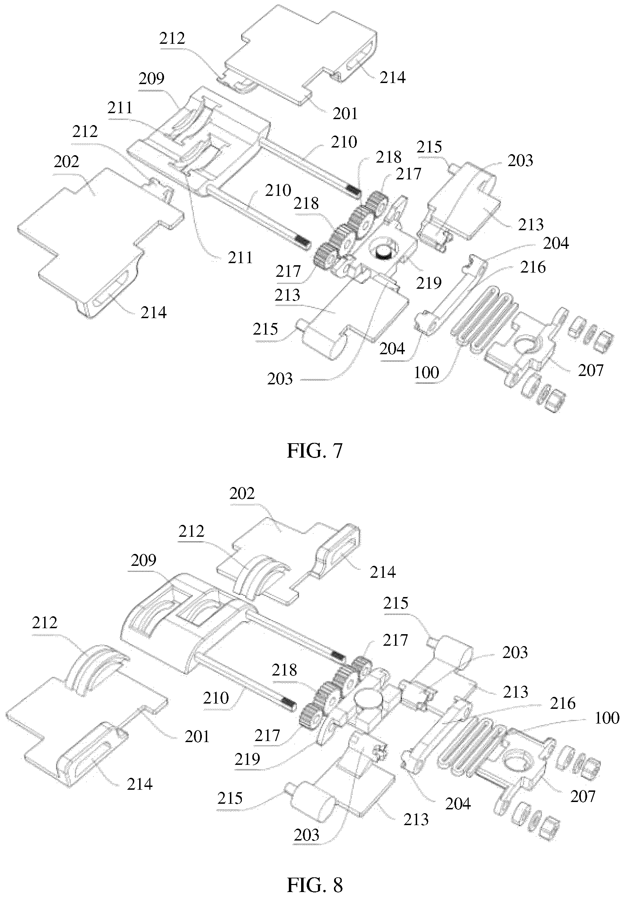

With reference to FIG. 7 and FIG. 8, in some embodiments, the rotating mechanism 200 further includes a first base 209, a first installation shaft 210 is installed on the first base 209, and the first damping shaft 203 and the second damping shaft 204 are sleeved on the first installation shaft 210. A first damping shaft 203 and a second damping shaft 204 in a same damping shaft fitting portion are sleeved on a same first installation shaft 210. The limiting plate 207 is connected to the first installation shaft 210, so that the first installation shaft 210 implements installation of the first damping shaft 203 and the second damping shaft 204. In an embodiment, the first base 209 is provided with two circular arc-shaped grooves 211, and the first rotating member 201 and the second rotating member 202 are respectively fixedly connected to circular arc-shaped blocks 212 fitting with the circular arc-shaped grooves 211. The circular arc-shaped block 212 is inserted into the circular arc-shaped groove 211, and the circular arc-shaped block 212 is capable of rotating around an axis that passes through a center corresponding to a circular arc of the circular arc-shaped groove 211, so that the first rotating member 201 and the second rotating member 202 can separately rotate relative to the first base 209.

With reference to FIG. 4 to FIG. 10, in some embodiments, the damping shaft fitting portion further includes a transition plate 213, and the first damping shaft 203 is fixedly connected to the transition plate 213. The first rotating member 201 and the second rotating member 202 are respectively provided with the damping shaft fitting portions, and the first rotating member 201 and the second rotating member 202 are respectively plug-connected to transition plates 213 in the damping shaft fitting portions corresponding to the first rotating member 201 and the second rotating member 202. In this way, linkage between each of the first rotating member 201 and the second rotating member 202 and a first damping shaft 203 corresponding to each of the first rotating member 201 and the second rotating member 202 is implemented. In an embodiment, because the first rotating member 201 and the second rotating member 202 are respectively provided with the damping shaft fitting portions, the first rotating member 201 and the second rotating member 202 are respectively capable of driving the first damping shafts 203 corresponding to the first rotating member 201 and the second rotating member 202 to rotate. The first rotating member 201 and the second rotating member 202 are respectively provided with strip-shaped holes 214, and the strip-shaped hole 214 may be a blind hole or a through hole. A limiting pin 215 is fastened to the transition plate 213, and the limiting pin 215 is inserted into the strip-shaped hole 214. Because the rotation axis of the first rotating member 201 is not coaxial with a rotation axis of the first damping shaft 203 corresponding to the first rotating member 201, the limiting pin 215 and the strip-shaped hole 214 fit with each other, so that the first rotating member 201 drives the corresponding first damping shaft 203 to rotate with the first rotating member 201, and in the process of rotating with the first rotating member 201, the limiting pin 215 slides in a length direction of a radial cross section of the strip-shaped hole 214. Similarly, because the rotation axis of the second rotating member 202 is not coaxial with a rotation axis of the first damping shaft 203 corresponding to the second rotating member 202, in a process in which the second rotating member 202 drives the corresponding second damping shaft 204 to rotate with the second rotating member 202, the limiting pin 215 slides in a length direction of a radial cross section of the strip-shaped hole 214.

With reference to FIG. 7 and FIG. 8, in some embodiments, the rotating mechanism 200 further includes a gear set. The gear set is configured to implement linkage between the first damping shafts 203 corresponding to the first rotating member 201 and the second rotating member 202. In this way, linkage between the two first damping shafts 203 is implemented by using the gear set, which also facilitates linkage between the first rotating member 201 and the second rotating member 202. For example, an end of the first installation shaft 210 is inserted into a first limiting hole (not shown) provided on the first base 209, and the first installation shaft 210 is limited on the first base 209 by using a nut, a circlip, or the like at an end portion of the first installation shaft 210, in other words, the first installation shaft 210 cannot be detached from the first base 209, and the first installation shaft 210 can rotate around an axis of the first installation shaft 210. A shaft hole on the first damping shaft 203 may be a square hole or another non-circular hole, and a radial cross section of at least a partial region of the first installation shaft 210 is also a square hole or another non-circular hole. In this way, after the first damping shaft 203 is sleeved on the first installation shaft 210, the first damping shaft 203 and the first installation shaft 210 can be radially fastened to each other, and rotation of the first damping shaft 203 can drive the first installation shaft 210 to rotate together. The second damping shaft 204 is movably sleeved on the first installation shaft 210, so that the second damping shaft 204 can move in an axial direction of the first installation shaft 210. The two second damping shafts 204 are fixedly connected to each other by using a first connecting plate 216, so that the second damping shaft 204 cannot rotate around an axis of the second damping shaft 204 while the second damping shaft 204 can move in the axial direction of the first installation shaft 210. The gear set includes two drive gears 217 and two driven gears 218. The two driven gears 218 are located between the two drive gears 217. The two drive gears 217 are respectively installed on two different first installation shafts 210, and the drive gear 217 is fixedly connected to the first installation shaft 210. In this way, rotation of the first installation shaft 210 can drive the drive gear 217 to rotate. Rotation of the drive gear 217 can drive the driven gear 218 to rotate. The rotating mechanism 200 further includes a second connecting plate 219. The first installation shaft 210 passes through a through hole on the second connecting plate 219, and the first installation shaft 210 is in clearance fit with the through hole. The driven gear 218 is rotatably installed between the first base 209 and the second connecting plate 219. In this way, when the first rotating member 201 rotates, the transition plate 213 can be driven to move. The transition plate 213 drives the first damping shaft 203 to rotate, and the first damping shaft 203 drives the first installation shaft 210 and the drive gear 217 to rotate. Because the two drive gears 217 and the two driven gears 218 mesh with each other, the other drive gear 217 can rotate, so that the second rotating member 202 can rotate. Similarly, when the second rotating member 202 rotates, the first rotating member 201 can rotate by using the gear set.

It should be noted that in some other possible implementations, the first installation shaft 210 may be fixedly connected to the first base 209, and the first damping shaft 203 is movably sleeved on the first installation shaft 210, in other words, the first damping shaft 203 rotates relative to the first installation shaft 210. The drive gear 217 is fixedly connected to the first damping shaft 203. For example, the drive gear 217 is fixedly connected to an end surface of the other end of the first damping shaft 203. For example, the drive gear 217 may be fastened to the end surface of the other end of the first damping shaft 203 through an integral connection. In this way, rotation of the first damping shaft 203 can directly drive the drive gear 217 to rotate.

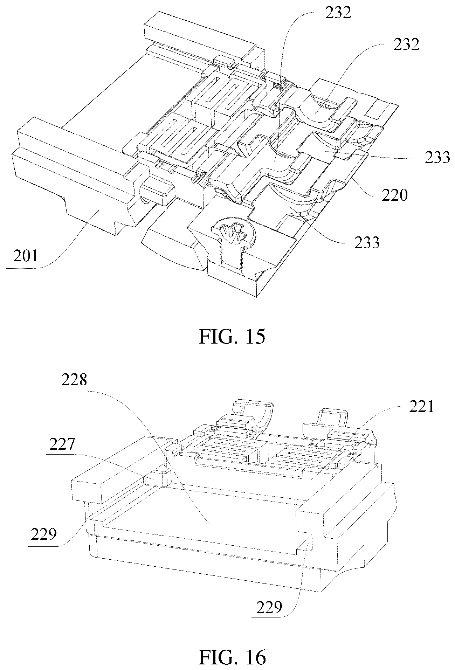

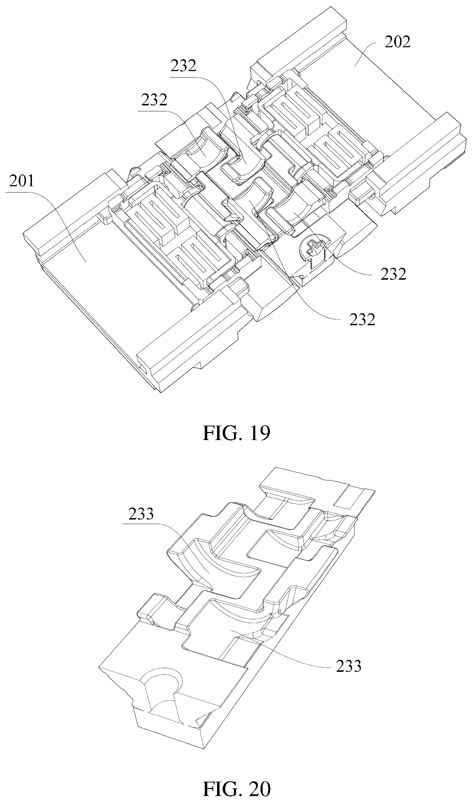

With reference to FIG. 12 to FIG. 20, in some other embodiments, a rotation axis of the first rotating member 201 during rotation of the first rotating member 201 relative to the second rotating member 202 is perpendicular to a direction in which the elastic element 100 is compressed. In this way, an applicable scope of the elastic element 100 can be expanded. It should be noted that only a partial structure of the rotating mechanism 200 is shown in FIG. 12 to FIG. 20, and a length extension direction of the rotating mechanism 200 is parallel to a length extension direction of a second base 230.

With reference to FIG. 12, FIG. 14, and FIG. 17, in some embodiments, the rotating mechanism 200 further includes follower portions, and the follower portion includes a first convex portion 220, a sliding member 221, and a limiting bracket 222. The limiting bracket 222 and the sliding member 221 fit with each other to form second limiting space 223, and the elastic element 100 is installed in the second limiting space 223. The first convex portion 220 is configured to: in a process in which the limiting bracket 222 rotates with the sliding member 221, enable the limiting bracket 222 to move in a third direction, so that the elastic element 100 is enabled, by using the limiting bracket 222, to be compressed. The third direction is parallel to the first direction X. The elastic element 100 is conveniently installed and compressed by using the second limiting space 223.

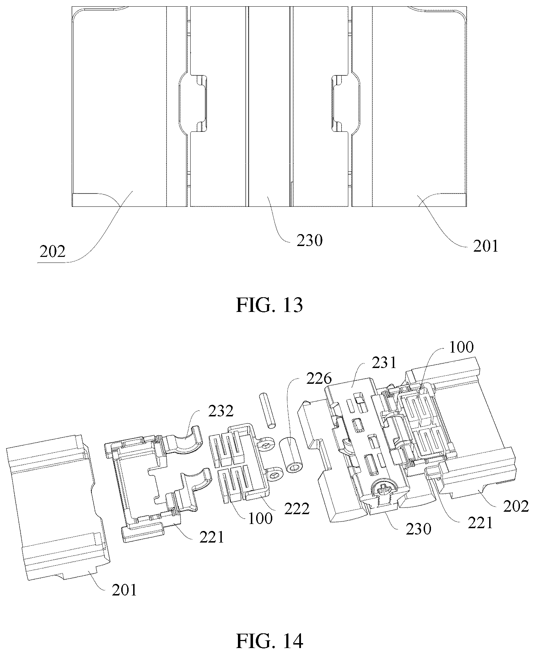

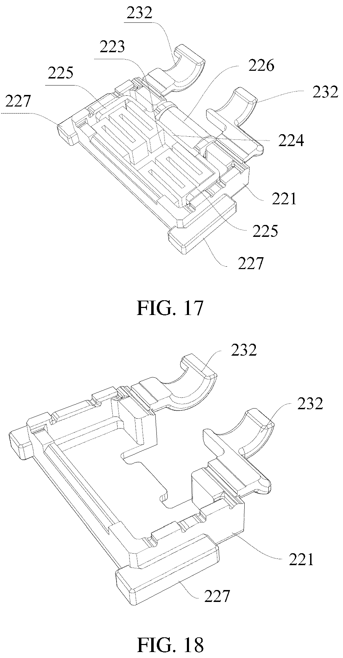

With reference to FIG. 14 and FIG. 17, in some embodiments, the limiting bracket 222 includes a first baffle plate 224, first end plates 225, and a squeezing shaft 226. The first end plates 225 are respectively fastened to two opposite ends of the first baffle plate 224, the squeezing shaft 226 is connected to the first baffle plate 224, and a length direction of the first end plate 225 is parallel to the third direction. The squeezing shaft 226 is capable of abutting against the first convex portion 220, so that the first convex portion 220 is capable of pushing the squeezing shaft 226 to move in the third direction. In this way, when the elastic element 100 is limited by using the first end plate 225 and a second end plate, the first convex portion 220 is used to push the squeezing shaft 226 to move, so that the elastic element 100 can be compressed. In the process in which the limiting bracket 222 rotates with the sliding member 221, the first convex portion 220 and the limiting bracket 222 gradually squeeze each other. Because the limiting bracket 222 is not fixedly connected to the sliding member 221, the limiting bracket 222 can move in the third direction, and because the elastic element 100 is limited between the limiting bracket 222 and the sliding member 221, the elastic element 100 is compressed.

With reference to FIG. 12, FIG. 16, FIG. 17, and FIG. 18, in some embodiments, the first rotating member 201 and the second rotating member 202 are respectively provided with the follower portions, and the first rotating member 201 and the second rotating member 202 are respectively slidably connected to sliding members 221 of the follower portions corresponding to the first rotating member 201 and the second rotating member 202. In this way, when the first rotating member 201 and the second rotating member 202 rotate relative to each other, the sliding members 221 can be driven to rotate. In an embodiment, guide ribs 227 are respectively disposed on two opposite sides of the sliding member 221, the first rotating member 201 and the second rotating member 202 are respectively provided with sliding grooves 228, and guide grooves 229 fitting with the guide ribs 227 are provided on groove arms of the sliding grooves 228, so that different sliding members 221 are respectively located in the sliding grooves 228 of the first rotating member 201 and the second rotating member 202 through fitting between the guide grooves 229 and the guide ribs 227. A sliding direction of the sliding member 221 is parallel to the third direction. In this way, in a rotation process of the first rotating member 201 or the second rotating member 202, the sliding member 221 can rotate together with the first rotating member 201 or the second rotating member 202, and the sliding member 221 can further slide relative to the sliding groove 228.

With reference to FIG. 13 to FIG. 20, in some embodiments, the rotating mechanism 200 further includes the second base 230, and the first convex portion 220 is fastened to the second base 230. The sliding member 221 is rotatably connected to the second base 230. After the first convex portion 220 is fastened to the second base 230, in a rotation process of the sliding member 221, the first convex portion 220 can push the squeezing shaft 226 to move. In an embodiment, the rotating mechanism 200 further includes a pressing plate 231, an arc-shaped rotating groove 233 is formed between the pressing plate 231 and the second base 230, an arc-shaped rotating block 232 is fastened to the sliding member 221, and the arc-shaped rotating block 232 is limited in the arc-shaped rotating groove 233, so that the sliding member 221 is rotatably installed on an integral structure formed by the second base 230 and the pressing plate 231, namely, a base portion. The pressing plate 231 may be detachably fastened to the second base 230 in a manner of screwing, engagement, or the like.

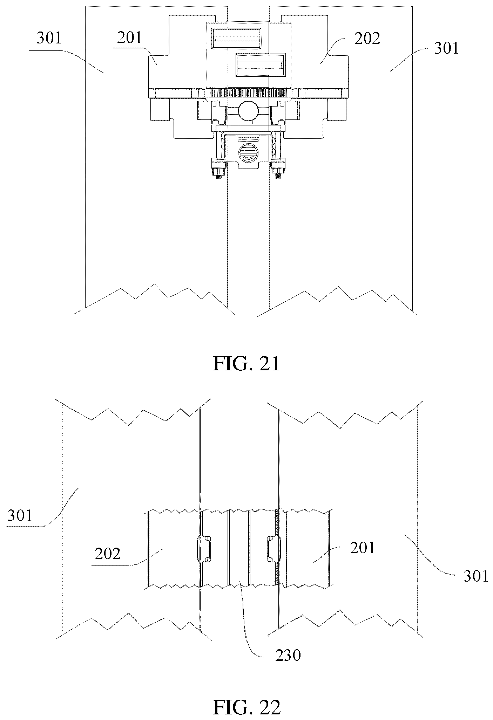

Referring to FIG. 21 and FIG. 22, an electronic device in FIG. 21 uses the rotating mechanism 200 in FIG. 4, and an electronic device in FIG. 22 uses the rotating mechanism 200 in FIG. 12. In one or more embodiments, the electronic device further provided in this embodiment of this application includes the rotating mechanism 200 in any embodiment. In this way, a problem of thickness space of the rotating mechanism 200 of the electronic device is resolved by using the rotating mechanism 200 having the elastic element 100, and an application scenario of a large elastic force in small space can be achieved by using the elastic element 100. The electronic device may be a foldable electronic device. An example electronic device may be a mobile phone, a tablet computer, a notebook, or an electronic reader. Certainly, the electronic device may alternatively be a non-foldable electronic device. In other words, the rotating mechanism 200 may be applied to the foldable electronic device, or may be applied to another non-foldable electronic device. An example in which the electronic device in this application is a foldable electronic device is used. The electronic device further includes a first frame body 301 and a second frame body 302. The rotating mechanism 200 is installed between the first frame body 301 and the second frame body 302. In this way, after the electronic device uses the foregoing rotating mechanism 200, impact of the elastic element 100 on thickness space occupation can be reduced. For example, the first rotating member 201 is fixedly connected to the first frame body 301, and the second rotating member 202 is fixedly connected to the second frame body 302. In an example in which the electronic device is a mobile phone, the electronic device further includes a display screen, the display screen may be a flexible inner screen, and the display screen is separately connected to the first frame body 301 and the second frame body 302.

In the descriptions of the specification of this application, specific features, structures, materials, or characteristics may be properly combined in any one or more embodiments or examples.

Finally, it should be noted that the foregoing embodiments are only used to describe the technical solutions in this application, but are not used to limit this application. Although this application has been described in detail with reference to the foregoing embodiments, it should be understood by a person of ordinary skill in the art that the technical solutions described in the foregoing embodiments may still be modified, or some technical features thereof may be equivalently replaced. These modifications or replacements do not make the essence of the corresponding technical solutions depart from the spirit and scope of the technical solutions in the embodiments of this application.

**Claims**

1.    An elastic element, comprising:

connecting arms, wherein there are a plurality of connecting arms, the plurality of connecting arms are distributed at intervals in a first direction, and there is an angle between a length extension direction of the connecting arm and the first direction; and

deformation portions, wherein the plurality of connecting arms are successively connected to each other by using the deformation portions, and two ends of a middle connecting arm in three adjacent connecting arms are respectively connected to the other two connecting arms by using the deformation portions, wherein an angle formed between length directions of the two connecting arms connected to the deformation portions after the deformation portions deform when subjected to a force is changeable.

2. The elastic element according to claim 1, wherein length directions of at least two connecting arms are parallel to each other.

3. The elastic element according to claim 1, wherein a length of the connecting arm is greater than a spacing between two adjacent connecting arms.

4. The elastic element according to claim 1, wherein the deformation portions are of a curved structure.

5. The elastic element according to claim 4, wherein the curved structure is in a shape of a semicircle, a minor arc, a polyline, or a wavy line.

6. The elastic element according to claim 1, wherein a material of the elastic element is an elastoplastic material.

7. The elastic element according to claim 6, wherein the elastoplastic material is steel, copper, or aluminum.

8. The elastic element according to claim 1, wherein the connecting arm is of a plate-like structure, and a cross section of the connecting arm in a width direction is a rectangle.

9. The elastic element according to claim 1, wherein a spacing between two adjacent connecting arms is not greater than a maximum deflection of the connecting arm.

10. The elastic element according to claim 1, wherein a height of the elastic element in the first direction meets the following condition: $H \le h$, wherein

$$h = Nt + (N-1)\frac{4Fl^3}{Ewt^3}$$ , $H$ represents the height of the elastic element in the first direction, $N$ represents a quantity of connecting arms, $t$ represents a thickness of the connecting arm, $F$ represents uniform load, $l$ represents a length of the connecting arm, $E$ represents an elastic modulus of a material of the connecting arm, and $w$ represents a width of the connecting arm.

11. A rotating mechanism, comprising a first rotating member, a second rotating member, and the elastic element according to any one of claims 1-10, wherein the first rotating member and the second rotating member are capable of rotating relative to each other, and the elastic element is configured to damp the relative rotation between the first rotation and the second rotating member.

12. The rotating mechanism according to claim 11, wherein a rotation axis of the first rotating member during rotation of the first rotating member relative to the second rotating member is parallel to a direction in which the elastic element is compressed.

13. The rotating mechanism according to claim 12, further comprising a damping assembly, wherein the damping assembly comprises damping shaft fitting portions, and the damping shaft fitting portion comprises a first damping shaft and a second damping shaft fitting with the first damping shaft; and the first damping shaft is configured to: in a rotation process of the first damping shaft, enable the second damping shaft to move in a second direction, so that the second damping shaft applies a force to the elastic element to enable the elastic element to be compressed, wherein the second direction is an axial direction of the second damping shaft.

14. The rotating mechanism according to claim 13, wherein an end surface of the first damping shaft has a plurality of groove structures recessed in an axial direction of the first damping shaft, and the plurality of groove structures are distributed on a first specified circle;

an end surface of the second damping shaft has a plurality of convex structures protruding in the axial direction of the second damping shaft, and the plurality of convex structures are distributed on a second specified circle; and the plurality of groove structures are disposed in one-to-one correspondence with the plurality of convex structures, and the convex structure is capable of being inserted into the groove structure.

15. The rotating mechanism according to claim 13 or 14, wherein the damping assembly further comprises a limiting plate, first limiting space is formed between the limiting plate and the second damping shaft, and the elastic element is installed in the first limiting

**16.** The rotating mechanism according to claim 15, further comprising a first base, wherein a first installation shaft is installed on the first base, and the first damping shaft and the second damping shaft are sleeved on the first installation shaft, wherein the limiting plate is connected to the first installation shaft.

**17.** The rotating mechanism according to claim 13 or 14, wherein the damping shaft fitting portion further comprises a transition plate, and the first damping shaft is fixedly connected to the transition plate; and the first rotating member and the second rotating member are respectively provided with the damping shaft fitting portions, and the first rotating member and the second rotating member are respectively plug-connected to transition plates in the damping shaft fitting portions corresponding to the first rotating member and the second rotating member.

**18.** The rotating mechanism according to claim 13 or 14, further comprising a gear set, wherein the gear set is configured to implement linkage between first damping shafts corresponding to the first rotating member and the second rotating member.

**19.** The rotating mechanism according to claim 11, wherein a rotation axis of the first rotating member during rotation of the first rotating member relative to the second rotating member is perpendicular to a direction in which the elastic element is compressed.

**20.** The rotating mechanism according to claim 19, further comprising follower portions, wherein the follower portion comprises a first convex portion, a sliding member, and a limiting bracket, wherein

the limiting bracket and the sliding member fit with each other to form second limiting space, and the elastic element is installed in the second limiting space; and
the first convex portion is configured to: in a process in which the limiting bracket rotates with the sliding member, enable the limiting bracket to move in a third direction, so that the elastic element is enabled, by using the limiting bracket, to be compressed.

**21.** The rotating mechanism according to claim 20, wherein the limiting bracket comprises a first baffle plate, first end plates, and a squeezing shaft;

the first end plates are respectively fastened to two opposite ends of the first baffle plate, the squeezing shaft is connected to the first baffle plate, and a length direction of the first end plate is parallel to the third direction; and
the squeezing shaft is capable of abutting against the first convex portion, so that the first convex portion is capable of pushing the squeezing shaft to move in the third direction.

**22.** The rotating mechanism according to claim 20 or 21, wherein the first rotating member and the second rotating member are respectively provided with the follower portions, and the first rotating member and the second rotating member are respectively slidably connected to sliding members of the follower portions corresponding to the first rotating member and the second rotating member.

**23.** The rotating mechanism according to claim 20 or 21, further comprising a second base, wherein the first convex portion is fastened to the second base, and the sliding member is rotatably connected to the second base.

**24.** An electronic device, comprising a first frame body, a second frame body, and the rotating mechanism according to any one of claims 11-23, wherein the rotating mechanism is installed between the first frame body and the second frame body.

100

102

102

101

101

102

102

102

FIG. 1

103
100
101

t

X

102

102

102

102 H

d

104

101

l

FIG. 2

FIG. 3

FIG. 4

FIG. 5

FIG. 6

FIG. 7

FIG. 8

FIG. 9

FIG. 10

206
204
206
216
206
204
206

FIG. 11

100
231
100
221
100
202
221
100
201

FIG. 12

202          230          201

FIG. 13

FIG. 14

FIG. 15

FIG. 16

FIG. 17

FIG. 18

FIG. 19

FIG. 20

301    201                    202        301

FIG. 21

301

202                    201

301

230

FIG. 22

FIG. 23

## INTERNATIONAL SEARCH REPORT

| International application No. |
|---|
| **PCT/CN2023/130749** |

| A. | CLASSIFICATION OF SUBJECT MATTER |
|---|---|

F16C11/10(2006.01)i; H05K5/02(2006.01)i; G09F9/30(2006.01)i; H04M1/02(2006.01)i; G06F1/16(2006.01)i

According to International Patent Classification (IPC) or to both national classification and IPC

| B. | FIELDS SEARCHED |
|---|---|

Minimum documentation searched (classification system followed by classification symbols)

IPC:F16C,H05K,G09F,H04M,G06F

Documentation searched other than minimum documentation to the extent that such documents are included in the fields searched

Electronic data base consulted during the international search (name of data base and, where practicable, search terms used)

VCN, VEN: 转动, 转轴, 弹力, 弹性, 弹簧, 臂, 板状, 扁平, 扁簧, 变型, 变形, 压缩, 平面, 轻薄, 空间, 厚, 阻尼, 折叠; elastic, spring, rotat+, shaft, fold+, deformation, arm, thickness, space, plane, press+, damp+.

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 219345255 U (HONOR DEVICE CO., LTD.) 14 July 2023 (2023-07-14) claims 1-24, and description, paragraphs 0003-0115, and figures 1-23 | 1-24 |
| X | CN 217814531 U (HONOR DEVICE CO., LTD.) 15 November 2022 (2022-11-15) description, specific embodiments, and figures 1-25 | 1-24 |
| A | CN 108324006 A (YANGZHOU WEST LAKE CYLINDER SPRING FACTORY) 27 July 2018 (2018-07-27) entire document | 1-24 |
| A | CN 113719525 A (KUNSHAN VOSO HINGE INTELLIGENCE TECHNOLOGY CO., LTD.) 30 November 2021 (2021-11-30) entire document | 1-24 |
| A | GB 737915 A (ELSON & ROBBINS et al.) 05 October 1955 (1955-10-05) entire document | 1-24 |
| A | US 2022308640 A1 (BEIJING XIAOMI MOBILE SOFTWARE CO., LTD.) 29 September 2022 (2022-09-29) entire document | 1-24 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 December 2023** | **21 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/130749**

| C. | DOCUMENTS CONSIDERED TO BE RELEVANT | | |
|---|---|---|
| Category* | Citation of document, with indication, where appropriate, of the relevant passages | Relevant to claim No. |
| A | WO 2022052721 A1 (HUAWEI TECHNOLOGIES CO., LTD.) 17 March 2022 (2022-03-17) entire document | 1-24 |
| A | WO 2022218147 A1 (HUAWEI TECHNOLOGIES CO., LTD.) 20 October 2022 (2022-10-20) entire document | 1-24 |

Form PCT/ISA/210 (second sheet) (July 2022)

**INTERNATIONAL SEARCH REPORT**
Information on patent family members

International application No.

**PCT/CN2023/130749**

| Patent document cited in search report | | | Publication date (day/month/year) | Patent family member(s) | | | Publication date (day/month/year) |
|---|---|---|---|---|---|---|---|
| CN | 219345255 | U | 14 July 2023 | None | | | |
| CN | 217814531 | U | 15 November 2022 | None | | | |
| CN | 108324006 | A | 27 July 2018 | None | | | |
| CN | 113719525 | A | 30 November 2021 | None | | | |
| GB | 737915 | A | 05 October 1955 | None | | | |
| US | 2022308640 | A1 | 29 September 2022 | EP | 4064657 | A1 | 28 September 2022 |
| | | | | CN | 115134435 | A | 30 September 2022 |
| WO | 2022052721 | A1 | 17 March 2022 | EP | 4198680 | A1 | 21 June 2023 |
| | | | | AU | 2021338733 | A1 | 04 May 2023 |
| | | | | KR | 20230060538 | A | 04 May 2023 |
| | | | | JP | 2023541909 | A | 04 October 2023 |
| | | | | CN | 114185398 | A | 15 March 2022 |
| | | | | CN | 116018574 | A | 25 April 2023 |
| WO | 2022218147 | A1 | 20 October 2022 | CN | 115217838 | A | 21 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023200483783